# EUROPÄISCHE PATENTSCHRIFT

(11) **EP 2 847 131 B1**
(45) Veröffentlichungstag und Bekanntmachung des Hinweises auf die Patenterteilung: **31.05.2017**
(21) Anmeldenummer: 13718837.1
(22) Anmeldetag: 25.04.2013
(51) Int. Cl.: C01B 33/18, C03B 19/10, C03C 1/02, C03C 12/00

(54) **VERFAHREN ZUR HERSTELLUNG EINES SIO2-GRANULATS**
PROCESS FOR PRODUCING SIO2 GRANULES
PROCÉDÉ DE PRODUCTION DE GRANULÉS DE SIO2

(30) Priorität: 26.04.2012 DE 102012008175
(43) Veröffentlichungstag der Anmeldung: 18.03.2015
(73) Patentinhaber: Heraeus Quarzglas GmbH & Co. KG, 63450 Hanau (DE)
(72) Erfinder: SUCH, Mario, 06773 Graefenhainichen (DE); SCHOETZ, Gerhard, 63741 Aschaffenburg (DE); LANGNER, Andreas, 63579 Freigericht (DE)
(74) Vertreter: Staudt, Armin Walter
(86) Internationale Anmeldenummer: PCT/EP2013/058585
(87) Internationale Veröffentlichungsnummer: WO 2013/160388

(56) Entgegenhaltungen:
- EP-A1- 1 256 547
- DE-A1- 2 840 459
- DE-A1-102007 045 097
- US-A- 3 401 017

## Beschreibung

### Technischer Hintergrund der Erfindung

Die Erfindung betrifft ein Verfahren zur Herstellung eines SiO₂-Granulats, umfassend das Bereitstellen einer Suspension, die SiO₂-Teilchen in einer wässrigen Flüssigkeit enthält, das Einfrieren der Suspension und das Entfernen der Flüssigkeit, wobei die eingefrorene SiO₂-Suspension unter Bildung einer Flüssigphase und einem Bodensatz aus agglomerierten SiO₂-Teilchen aufgetaut wird, die Flüssigphase entfernt und der Bodensatz zum Entfernen von Restfeuchte und unter Bildung des SiO₂-Granulats getrocknet wird.

Weiterhin betrifft die Erfindung eine Verwendung des Granulats.

### Stand der Technik

In der keramischen Verfahrenstechnik sind verschiedene Verfahren zur Herstellung von Granulaten bekannt, die auch für SiO₂ oder andere Gläser eingesetzt werden. Grundsätzlich wird dabei eine körnige Masse erzeugt indem einer Suspension Feuchtigkeit entzogen wird. Druck- und Temperaturverhältnisse spielen dabei eine wesentliche Rolle. Weiterhin kann der Schritt des Feuchtigkeitsentzugs durch mechanische Einwirkung unterstützt werden.

Aus DE 197 29 505 A1 ist ein Verfahren zur Herstellung von SiO₂-Granulat bekannt, bei dem eine wässrige SiO₂-Dispersion in einem Rührbehälter zunächst bei intensiver Rührbewegung homogenisiert und dann bei relativ niedriger Rotationsgeschwindigkeit ein auf etwa 100°C erwärmter Stickstoffstrom auf die SiO₂-Dispersion einwirkt. Auf diese Weise erfolgt der Feuchtigkeitsentzug und es entsteht im Rührbehälter ein weitgehend porenfreies SiO₂-Granulat. Das Verfahren ist langwierig und energieaufwändig. Darüber hinaus besteht die Gefahr Kontamination einzutragen, da das Granulierwerkzeug und die Rührschüssel über den gesamten Granulierprozess sehr intensiven Kontakt mit der SiO₂-Dispersion haben.

Weiterhin sind aus US 3,401,017 SiO₂-Pigmente bekannt, die unter anderem als Füllstoff in Gummi oder Kunststoffen eingesetzt werden. Die Herstellung dieser SiO₂-Pigmente erfolgt grundsätzlich mit den Verfahrensschritten: Einfrieren und Auftauen eines SiO₂-Schlickers, sowie Trocknen des SiO₂-Bodensatzes nach Entfernen der Flüssigphase. Mit dem Verfahren gemäß US 3,401,017 sollen sich die Sedimentations- bzw. Kompaktierungseigenschaften der SiO₂-Pigmente verbessern, wodurch der Trocknungsaufwand reduziert wird.

Auch JP 02-199015 A betrifft ein Verfahren, bei dem ein wässriger SiO₂-Schlicker zum Einsatz kommt, der eingefroren und anschließend einem Trocknungsschritt unterworfen wird. Der Auftauvorgang, gefolgt vom Absetzen und Konzentrieren der SiO₂-Partikel in dem aufgetauten Schlicker, wird in einem "Verdicker" durchgeführt. Danach erfolgt eine Trocknung in einem Filtrationstrockner, der von einem Heißluftgebläse und einer Vakuumpumpe unterstützt wird. Am Ende des Verfahrens wird ein trockener Filterkuchen aus synthetischem Quarzglas erhalten.

Ein Verfahren zur Herstellung eines Glasgranulats unter Anwendung einer eingefrorenen Suspension ist aus DE 41 00 604 C1 bekannt. Bei diesem Verfahren wird ein feinteiliges Glasgranulat herstellt, indem ein Glaspulver mittlerer Korngröße in einer wässriger Mahlflüssigkeit unter Zuhilfenahme von Mahlkörpern aus Glas dispergiert und zerkleinert wird. Nach Abtrennung der Mahlkörper wird der Glasschlicker tiefgefroren und anschließend gefriergetrocknet, wobei im Hochvakuum die gefrorene wässrige Mahlflüssigkeit durch Sublimation verdampft. Das erhaltene Glasgranulat hat eine mittlere Korngröße im Bereich von 0,5 bis 3 µm. Kleinere Granulatkörner sind nur mit wesentlich längeren Mahldauern erreichbar.

Aus DE 28 40 459 A1 ist ein Frostgranulationsverfahren zur Herstellung von SiO₂-Granulat bekannt. Ausgangsmaterial sind Alkalimetallsilikatlösungen, denen zur Einstellung des pH-Wertes im sauren Bereich (pH 2,5 bis 6) organische Säuren zugesetzt werden, bevor die Suspension gefroren, aufgetaut, dekantiert und der SiO₂-Rückstand nach gegebenenfalls wiederholten Waschvorgängen als Granulat getrocknet anfällt.

### Technische Aufgabenstellung

Ausgehend von den vorgenannten Granulierverfahren liegt daher der vorliegenden Erfindung die Aufgabe zugrunde, ein Verfahren zur Herstellung eines SiO₂-Granulats anzugeben, das auf besonders einfache und wirtschaftliche Weise ein hochreines, feines Granulat erzeugt.

Weiterhin liegt der Erfindung die Aufgabe zugrunde eine geeignete Verwendung für das Granulat anzugeben.

### Allgemeine Beschreibung der Erfindung

Die vorstehende Aufgabe wird ausgehend von einem Verfahren der eingangs genannten Gattung erfindungsgemäß dadurch gelöst, dass die Suspension zur Einstellung des pH-Wertes größer 7 einen Zusatz von alkalifreien Basen in Form von Stickstoffhydriden enthält.

Nach dem erfindungsgemäßen Verfahren wird eine wässrige SiO₂-Suspension, auch SiO₂-Schlicker genannt, in einem Behälter wie etwa einer Kunststoffflasche zunächst aufbereitet, dann tiefgefroren und anschließend wieder auf Raumtemperatur aufgetaut. Bei der Herstellung der SiO₂-Suspension wird erfindungsgemäß ein Zusatz von alkalifreien Basen in Form von Stickstoffhydriden in die Suspension gegeben. Dieser Zusatzstoff bewirkt eine Einstellung des pH-Wertes größer 7 und führt dazu, dass die Hydrathülle um die SiO₂-Partikel aufgebrochen wird, wodurch eine Stabilisierung der Suspension eintritt und ein sehr homogener Schlicker auch über Stunden aufrecht erhalten wird. In dieser Aufbereitungsphase setzen sich keine SiO₂-Agglomerate aus der SiO₂-Suspension am Boden des Gefäßes ab. Beim Einfrieren bzw. während des Auftauprozesses agglomerieren die ursprünglichen SiO₂-Teilchen und setzen sich als feines Granulat am Boden des Behälters ab. Die ursprüngliche Suspensionsflüssigkeit, also Wasser mit den Stickstoffhydrid-Zusätzen, steht als mehr oder weniger klare Flüssigphase über dem Bodensatz aus agglomerierten SiO₂-Teilchen. Somit kann die Flüssigkeit ohne Schwierigkeiten entfernt werden, etwa durch Dekantieren, Absaugen oder Zentrifugieren. Zurück bleibt als Bodensatz das feuchte SiO₂-Granulat, das nur noch einem Trocknungsschritt zur Beseitigung des restlichen Wassers unterzogen werden muss. Das erhaltene SiO₂-Granulat mit Granulatteilchen-Größen bis ca. 700 µm ist relativ weich und zerfällt dadurch leicht in feinteilige Granulatkörner. Das anfallende SiO₂-Granulat kann auch ohne weitere Zerkleinerungsmaßnahmen eingesetzt werden. Es hat sich weiterhin gezeigt, dass durch den Zusatz von Stickstoffhydriden zum SiO₂-Schlicker sich die Kornverteilung der erhaltenen SiO₂-Granulate zu Gunsten kleinerer Korngrößen verschiebt, - also der Grobanteil minimiert werden kann.

Zur Granulation ist kein Rührwerkzeug oder ein anderes mechanisches Hilfsgerät erforderlich. Das Einfrieren und Auftauen des Schlickers kann im gleichen Behälter erfolgen, in dem der Schlickeransatz homogenisiert worden ist, so dass das Risiko für eine Kontaktkontamination mit anderen Materialien minimiert ist. Das erfindungsgemäße Verfahren ist daher besonders zur Herstellung von hochreinen, dotierten und nicht-dotierten SiO₂-Granulaten geeignet.

Diese Verfahrensweise zur Herstellung eines SiO₂-Granulats ist einfach, schnell und zuverlässig.

Die bemerkenswerte Phasentrennung in Bodensatz und Flüssigphase beim Auftauen beruht vermutlich auf der starken Volumenänderung beim Phasenübergang Eis - Wasser. Zunächst stellt der SiO₂-Schlicker eine kolloidale Suspension dar, deren Stabilität durch die lonenbelegung an der Oberfläche der SiO₂-Teilchen erhalten wird. Eine Sedimentation durch Stehenlassen der wässrigen SiO₂-Suspension in Ruhe findet daher erst nach langer Zeit statt und führt dann in der Regel zu einem mehr oder weniger festen "SiO₂-Kuchen", nicht aber zu einem feinteiligen Granulat. Für das erfindungsgemäße Verfahren ist vorstellbar, dass die beim Einfrieren sich bildenden großen dendritischen Eiskristalle die lonenbelegung an der Oberfläche der SiO₂-Teilchen zerstören und damit die Aggregatneigung beziehungsweise die Fließeigenschaften der SiO₂-Teilchen verändern. Beim Auftauen können sich dann die SiO₂-Teilchen leichter voneinander trennen beziehungsweise lagern sich durch die wesentlich verringerten Anlagerungskräfte zu kleinen Granulatteilchen zusammen, die leicht sedimentieren.

Eine vorteilhafte Ausgestaltung der Erfindung besteht darin, dass der Wassergehalt der Suspension beim Einfrieren mindestens 30 Gew.-% bis maximal 90 Gew.-%, vorzugsweise mindestens 70 Gew.-% beträgt. Dieser relativ hohe Wasseranteil garantiert eine gute Benetzung der SiO₂-Teilchen, so dass die großen Eiskristalle ihre Wirkung beim Auftauen der Suspension zeigen können. Darüber hinaus sorgt das Wasser für eine homogene Aufschlämmung bei der Herstellung der SiO₂-Suspension. Da die einzelnen SiO₂-Partikel in der Suspension mit hohem Wassergehalt relativ weit voneinander beabstandet sind, können sich die Dotierstoffe entsprechend gut verteilen, wodurch eine homogene Dotierung möglich ist. Überdies führt eine SiO₂-Suspension mit relativ geringem Feststoffanteil zu eher feinteiligem Granulat.

Weiterhin hat es sich als vorteilhaft erwiesen, das Einfrieren der SiO₂-Suspension in einem Temperaturbereich von -5°C bis -40°C vorzunehmen. Dieser Temperaturbereich stellt einen geeigneten Kompromiss zwischen Produktivität und Energieverbrauch dar. Bei einer Temperatur nur knapp unter 0°C dauert der Einfriervorgang für ein vollständiges Durchfrieren der SiO₂-Suspension lange und das Verfahren wird tendenziell unwirtschaftlich. Einfriertemperaturen kleiner -40°C sind durchaus möglich, der apparative Aufwand dafür ist aber entsprechend hoch, ohne dass die Effizienz des erfindungsgemäßen Verfahrens dadurch verbessert würde. Die Zeitdauer für das Einfrieren der Suspension liegt bevorzugt bei mindestens 12 Stunden, eine Dauer, die sich in übliche industrielle Fertigungsabläufe integrieren lässt.

Durch Zugabe von Stickstoffhydriden, vorzugsweise in Form von Ammoniak (NH₃), Ammoniumcarbonat (NH₄)₂CO₃, Urotropin (C₆H₁₂N₄), oder Ammoniumcarbamat (CH₆N₂O₂) - ist der pH-Wert der Suspension auf größer 7, vorzugsweise zwischen 12 und 14 einstellbar, was sich beim Zusatz eines Dotierstoffes auf dessen homogene Verteilung vorteilhaft auswirkt. Die vorgenannten Hilfsstoffe führen zum Aufbruch der Hydrathülle um die SiO₂-Partikel, so dass eine Stabilisierung der Suspension eintritt. Bei Zugabe von Dotierstoffen können sich diese dementsprechend gut an die SiO₂-Partikel anlagern und sich in der Suspension verteilen.

Ein Zusatz von ein bis zwei Volumenprozent des Stickstoffhydrids, bevorzugt konzentrierte Ammoniaklösung, hat sich besonders bewährt.

Für den Auftauvorgang hat es sich als vorteilhaft erwiesen, wenn dieser bei ruhender Suspension in einer Umgebungstemperatur im Bereich von 20°C bis 100 °C erfolgt. Bei höheren Temperaturen verdampft bereits ein Teil der wässrigen Flüssigkeit, so dass eine Übergangsphase zum Trocknungsschritt eingeleitet wird, was im Einzelfall auch vorteilhaft sein kann.

Zur Beschleunigung des Auftauvorgangs kann der gefrorene SiO₂-Schlicker mit Mikrowellen beaufschlagt werden. Das Einwirken von Mikrowellenstrahlung geringer Leistung verringert die Dauer für das Auftauen.

Sofern die Suspension lösliche Verunreinigungen enthält, hat es sich als vorteilhaft erweisen, den Bodensatz aus agglomerierten SiO₂-Teilchen nach dem Abtrennen der Flüssigphase durch Aufschlämmen in vollentsalztem Wasser (VE-Wasser) zu waschen. Die Verunreinigungen, beispielsweise in Form von Salzen, können so leicht entfernt werden. Dieser Waschvorgang ist leicht durchführbar, da bei Zugießen von Wasser auf den Bodensatz eine SiO₂-Suspension entsteht, deren SiO₂-Teilchen schnell sedimentieren und erneut einen Bodensatz bilden. Der Waschvorgang ist also auch bei mehreren Wiederholungen in kurzer Zeit durchführbar.

Hinsichtlich der Trocknung zur Entfernung der Restfeuchte des Bodensatzes ist es weiterhin vorteilhaft eine Temperaturbereich von 100°C bis 500°C auszuwählen. Dieser Temperaturbereich wird von einfachen Trockenschränken abgedeckt, so dass kein großer apparativer Aufwand für den Trocknungsschritt erforderlich ist. Grundsätzlich ist es auch möglich den Bodensatz aus agglomerierten SiO₂-Teilchen einer Trockenstrecke in einem Durchlaufofen zuzuführen. Die gegenüber Raumtemperatur erhöhte Temperatur führt zu einer zügigen Trocknung des Bodensatzes zu dem gewünschten SiO₂-Granulat.

Zur weiteren Optimierung des Trocknungsschrittes hat es sich als vorteilhaft erwiesen den Bodensatz mechanisch zu bewegen, beispielsweise dadurch, dass der Behälter mit dem SiO₂-Granulat leicht geschüttelt wird.

Für die Trocknung des Bodensatzes kann es hilfreich sein, die Restfeuchte durch Filtration zu minimieren.

Um das Trocknen weiter zu optimieren, kann der Bodensatz aus agglomeriertem SiO₂-Teilchen nach dem Entfernen der Flüssigphase unter Abtrennung von weiterer wässriger Flüssigkeit zentrifugiert werden. Das Zentrifugieren verkürzt die Trocknungsdauer, da innerhalb weniger Minuten die im Bodensatz befindliche Flüssigkeit ausgetrieben wird. Beim Zentrifugieren setzen sich außerdem kleinste Schwebteilen aus der Flüssigkeit sicher ab, so dass die Trennung Feststoff von Flüssigkeit optimiert ist.

Eine vorteilhafte Ausgestaltung der Erfindung besteht darin, dass die SiO₂-Suspension in einem geschlossenen Behälter eingefroren und wieder aufgetaut wird. Durch diese Maßnahme wird ein möglicher Eintrag von Verunreinigungen während der Einfrier- und Auftauphase verhindert.

Vorteilhafterweise enthält die wässrige SiO₂-Suspension neben den SiO₂-Teilchen auch Dotierstoffe.

Das erfindungsgemäße Verfahren ist insbesondere auch für die Herstellung von dotiertem SiO₂-Granulat geeignet, bei dem die Anforderungen an die Homogenität der Dotierstoffverteilung sehr hoch sind. Dies ist im Allgemeinen bei Anwendungen im Bereich der Optik der Fall. Als Beispiele hierfür seien Quarzgläser für passive optische Lichtwellenleiter, Lasergläser und Filtergläser genannt.

In diesem Zusammenhang hat es sich bewährt, wenn als Dotierstoff ein Oxid oder mehrere Oxide - oder eine Vorstufe davon; wie etwa wie Chloride oder Fluoride-eingesetzt werden, ausgewählt aus der folgenden Gruppe von Elementen: Al, B, P, Nb, Ta, Mg, Ga, Zn, Ca, Sr, Ba, Cu, Sb, Bi, Ge, Hf, Zr, Ti sowie alle Seltenerdmetalle.

Da Menge und homogene Verteilung der Dotierstoffe für die genannten Anwendungen von großer Bedeutung sind, ist gerade das erfindungsgemäße Verfahren auf Basis der Frostgranulation hierfür geeignet, da dabei das Risiko des Eintrags von Fremdelementen, die die Wirkung der gezielt eingesetzten Dotierstoffe stören könnten, minimiert ist.

Das nach dem erfindungsgemäßen Verfahren erhaltene SiO₂-Granulat zeichnet sich durch eine Partikelgröße der Granulatteilchen im Bereich kleiner oder gleich 700 µm aus. Diese Granulate sind weich und zerfallen unter nur leichten Druck in kleinere Aggregate. Dies kann bei der Weiterverarbeitung von Vorteil sein, da beim Zerdrücken der weichen Granulatkörner das Granulat eine weitere Durchmischung erfährt.

Das nach dem erfindungsgemäßen Verfahren hergestellte SiO₂-Granulat eignet sich besondere als Ausgangsstoff für optisch aktive Materialien für laseraktive Komponenten, wie Faserlaser, Stab- oder Scheibenlase. Weiterhin sind diese SiO₂-Granulate als Ausgangsstoff für Filtergläser oder zur Herstellung der synthetischen Innenschicht bei Quarzglastiegeln zum Erschmelzen von Silizium geeignet. Daneben ist als Anwendung für die nach dem erfindungsgemäßen Verfahren hergestellten SiO₂-Granulate auch die Herstellung von Bauteilen aus Quarzglas für den Einsatz in Trockenätzprozessen der Halbleiterindustrie zu nennen. Diese Verwendungsmöglichkeiten sind insbesondere gegeben, wenn der SiO₂-Suspension Dotierstoffe zugegeben wurden. Die homogene Dotierstoffverteilung bleibt auch im Granulat erhalten, wodurch optimale Weiterverarbeitungsmöglichkeiten gegeben sind.

### Ausführungsbeispiel

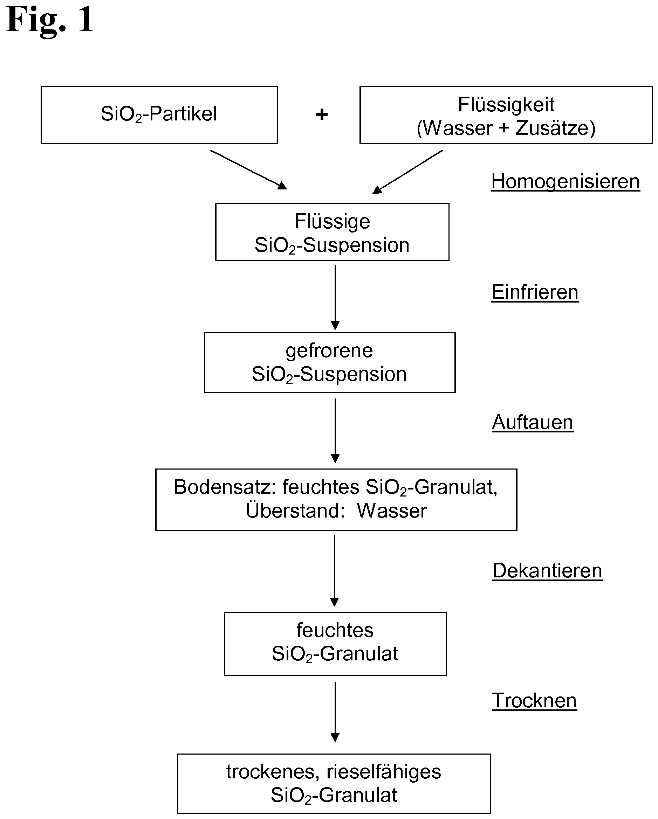

Nachfolgend wird die Erfindung anhand eines Ausführungsbeispiels und Zeichnungen näher erläutert. Dabei zeigt
- **Fig. 1**: ein Flussdiagramm mit Verfahrensschritten zur Erläuterung der Herstellung von SiO₂-Granulat gemäß der Erfindung und
- **Fig. 2**: eine Siebanalyse des hergestellten SiO₂-Granulats.

### Beispiel 1

Zur Herstellung eines SiO₂-Granulats wird eine Suspension aus diskreten SiO₂-Partikeln in Form von SiO₂-Aggregaten in VE-Wasser in einem verschließbaren Kunststoffbehälter, beispielsweise einer PTFE-Flasche mit Deckel, hergestellt. Dieser SiO₂-Suspension wird tropfenweise eine konzentrierte Ammoniaklösung zugegeben, so dass sich ein pH-Wert von 9,5 einstellt.
Die SiO₂-Aggregate im Schlicker haben eine mittlere Teilchengröße um 10 µm und sie bestehen aus SiO₂-Primärteilchen mit Teilchengrößen im Bereich von 5 nm bis 100 nm.

Der Feststoffgehalt der SiO₂-Suspension liegt bei 12 Gew.-% .Zur Homogenisierung wird die SiO₂-Suspension mehrere Stunden durchgerührt und man erhält schließlich eine stabile, homogene SiO₂-Suspension. Die Flasche mit der Suspension wird durch einen Deckel oder eine geeignete Folie verschlossen und anschließend in einem Gefrierschrank über Nacht bei -18°C tiefgefroren. Zum Auftauen wird der Behälter mit der gefrorenen SiO₂-Suspension aus dem Gefrierschrank entnommen und bei Raumtemperatur aufgetaut.

Beim Auftauen trennen sich die agglomerierten SiO₂-Teilchen als Bodensatz vom Wasser, so dass in der unteren Hälfte des Behälters der Bodensatz ansteht und darüber das Wasser als mehr oder weniger klare Flüssigkeit.

Die Flüssigkeit wird anschließend abgegossen. Das im Bodensatz verbliebene Restwasser kann verdampft werden, indem der Bodensatz bei 120 °C in einem Trockenschrank getrocknet wird. Dieser Trocknungsschritt kann beschleunigt werden, indem beispielsweise der Behälter mit dem feuchten Bodensatz leicht geschüttelt wird.

Eine alternative Methode um den Trocknungsvorgang zu beschleunigen besteht darin den feuchten Bodensatz aus agglomerierten SiO₂-Teilchen in eine Zentrifuge zu geben. Bei einer Drehzahl von 5000 U/min erhält man je nach Einwaage und Zentrifugenleistung nach etwa 5 Minuten ein fast vollständig getrocknetes SiO₂-Granulat. Sofern die verbleibende Restfeuchte bei der Weiterverarbeitung des Granulats nicht sogar hilfreich ist, kann sie durch leichte Erwärmung innerhalb kürzester Zeit entfernt werden.

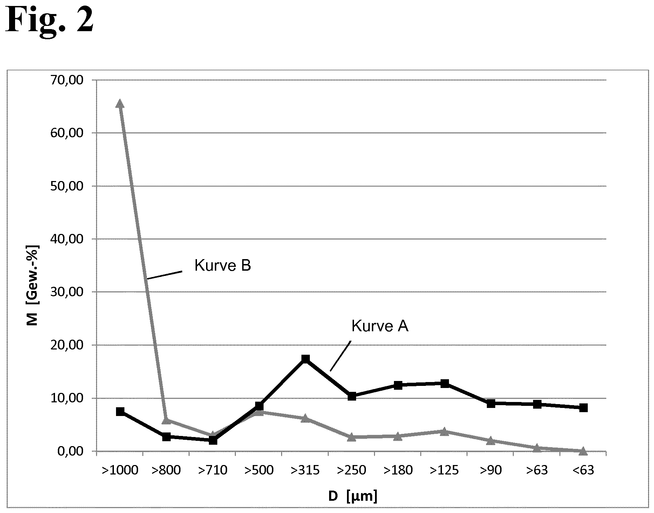

Figur 2 zeigt das Ergebnis der Siebanalyse nach dem Verfahren gemäß DIN 66165-2 des so erhaltenen Granulats im Vergleich zu dem SiO₂-Granulat gemäß Vergleichsbeispiel 2. Aufgetragen ist der relative prozentuale Anteil M (bezogen auf die Gesamtmasse in Gewichtsprozent) über der Korngröße D in µm der SiO₂-Granulate. Die Kurve A zeigt die Kornverteilung des erfindungsgemäß hergestellten SiO₂-Granulats bei einer Restfeuchte von etwa 40 % im Vergleich zu einem SiO₂-Granulat, das mittels Frostgranulation, aber ohne den Zusatz von Stickstoffhydriden zur anfänglichen SiO₂-Suspension (Kurve B) hergestellt wurde. Es zeigt sich, dass das erfindungsgemäß hergestellte SiO₂-Granulat einen hohen Anteil von Korngrößen im Bereich von 300 µm bis 600 µm aufweist, während das SiO₂-Granulat, das ohne Zusatz eines Stickstoffhydrids zum SiO₂-Schlicker hergestellt wurde, einen sehr hohen Grobanteil von Granulaten größer 800 µm zeigt.

Die Zugabe von Stickstoffhydriden zum SiO₂-Schlicker wirkt sich demnach auf die Kornverteilung der erhaltenen SiO₂-Granulate zu Gunsten kleinerer Korngrößen aus und reduziert dadurch den anfallenden Grobanteil. Die Korngrößenverteilung ist insgesamt breiter und homogener. Damit bestätigt sich, dass das erfindungsgemäße Verfahren dazu geeignet ist, insbesondere feinteilige SiO₂-Granulate bereitzustellen.

Das erfindungsgemäß hergestellte SiO₂-Granulat ist geeignet um bei der Herstellung von hochreinem Quarzglas verwendet zu werden.

### Beispiel 2

Ausgehend von der wässrigen SiO₂-Suspension aus Beispiel 1 wird dieser Schlicker durch tropfenweise Zugabe einer konzentrierten Ammoniaklösung auf einen pH-Wert von 9,5 eingestellt. Danach werden der homogenisierten, alkalischen SiO₂-Suspension Dotierstoffe in gelöster Form und durch zeitlich gesteuerte, tropfenweise Zugabe einer wässrigen Dotierstofflösung aus AlCl₃ und YbCl₃ unter ständigem Rühren zugeführt.

Wie in Beispiel 1 beschrieben wird anschließend dieser nun dotierte Schlicker eingefroren und wieder aufgetaut. Auch diesmal bildet der Feststoff beim Auftauen einen Bodensatz und darüber steht die ammoniakalische Flüssigkeit an, die dekantiert wird. Der Bodensatz enthält Ammoniumchlorid (NH₄Cl) aus der Reaktion des Ammoniaks mit den Dotierstoffen. Das Ammoniumchlorid kann entweder bei entsprechend hohen Trocknungstemperaturen sublimieren oder ausgewaschen werden. Zum Auswaschen wird auf den Bodensatz VE-Wasser gegeben, das feuchte Granulat setzt sich nach kurzer Zeit wieder als Bodensatz ab und die gelösten Ammoniumsalze werden durch Abgießen der überstehenden Flüssigkeit entfernt. Nach dem anfänglichen Einfrier- und Auftauvorgang zeigen die SiO₂-Teilchen - ob dotiert oder undotiert - eine starke Sedimentationsneigung, so dass dieser Waschvorgang bei Bedarf mehrmals wiederholt werden kann und nicht zeitaufwändig ist.

Das erhaltene Granulat eignet sich insbesondere für die Weiterverarbeitung zu Bauteilen aus optisch aktiven Materialien für laseraktive Komponenten, wie beispielsweise Faserlaser sowie für die Herstellung von Quarzglas für den Einsatz in Trockenätzprozessen.

### Vergleichsbeispiel 1

Eine SiO₂-Suspension gemäß Beispiel 1 wird nicht eingefroren, sondern über mehrere Tage in Ruheposition stehen gelassen. Es tritt keine Trennung von SiO₂-Teilchen und wässriger Flüssigkeit auf. Zur Entfernung des Wassers wird der Schlicker über 24 Stunden in einem Trockenschrank bei 120 °C getrocknet.

Zurück bleibt ein fester "SiO₂-Kuchen", der mit einem Mörser per Hand zu einem groben, splittrigen Granulat zermahlen wird. Durch die Bearbeitung mit dem Mörser besteht überdies ein erhöhtes Risiko, dass Kontaminationen in das SiO₂-Granulat eingetragen werden.

### Vergleichsbeispiel 2

Es wird eine wässrige SiO₂-Suspension aus diskreten SiO₂-Partikeln in Form von SiO₂-Aggregaten in VE-Wasser in einem verschließbaren Kunststoffbehälter, beispielsweise einer PTFE-Flasche mit Deckel, hergestellt. Anschließend wird die SiO₂-Suspension ohne Zugabe eines Stickstoffhydrids in einem Gefrierschrank eingefroren. Während des Auftauens bei Raumtemperatur trennen sich die agglomerierten SiO₂-Teilchen als Bodensatz vom Wasser, so dass in der unteren Hälfte des Behälters der Bodensatz ansteht und darüber das Wasser als mehr oder weniger klare Flüssigkeit.

Die Flüssigkeit wird anschließend abgegossen. Das im Bodensatz verbliebene Restwasser kann verdampft werden, indem der Bodensatz bei 120 °C in einem Trockenschrank getrocknet wird.

Der SiO₂-Schlicker ohne Zusatz von Stickstoffhydriden führt zu einem relativ harten SiO₂-Granulat, das teilweise auch in kleinen Klumpen vorliegt. Die Kornanalyse gemäß Fig. 2 Kurve B zeigt einen hohen Grobanteil von bis zu 65 % für Korngrößen zwischen etwa 800 µm und >1000 µm im Vergleich zu Granulaten, deren Ausgangsmaterial ein SiO₂-Schlicker mit Zugabe von Ammoniak als Stickstoffhydrid war (Fig. 2 Kurve A).

## Patentansprüche

1. Verfahren zur Herstellung eines SiO₂-Granulats, umfassend das Bereitstellen einer Suspension, die SiO₂-Teilchen in einer wässrigen Flüssigkeit enthält, das Einfrieren der Suspension und das Entfernen der Flüssigkeit, wobei die eingefrorene SiO₂-Suspension unter Bildung einer Flüssigphase und einem Bodensatz aus agglomerierten SiO₂-Teilchen aufgetaut wird, die Flüssigphase entfernt und der Bodensatz zum Entfernen von Restfeuchte und unter Bildung des SiO₂-Granulats getrocknet wird, **dadurch gekennzeichnet, dass** die Suspension zur Einstellung des pH-Wertes größer 7 einen Zusatz von alkalifreien Basen in Form von Stickstoffhydriden enthält.

2. Verfahren nach Anspruch 1, **dadurch gekennzeichnet, dass** der Wassergehalt der Suspension beim Einfrieren mindestens 30 Gew.-% und maximal 90 Gew.-%, vorzugsweise mindestens 70 Gew.-% beträgt.

3. Verfahren nach Anspruch 1 oder 2, **dadurch gekennzeichnet, dass** das Einfrieren der SiO₂-Suspension in einem Temperaturbereich von -5°C bis - 40°C erfolgt.

4. Verfahren nach einem der vorhergehenden Ansprüche, **dadurch gekennzeichnet, dass** die Suspension über eine Zeitdauer von mindestens 12 Stunden eingefroren wird.

5. Verfahren nach einem der vorhergehenden Ansprüche, **dadurch gekennzeichnet, dass** als Stickstoffhydrid Ammoniak (NH₃) oder Ammoniumcarbonat ((NH₄)₂CO₃) oder Urotropin (C₆H₁₂N₄) oder Ammoniumcarbamat (CH₆N₂O₂) zugesetzt wird.

6. Verfahren nach einem der vorhergehenden Ansprüche, **dadurch gekennzeichnet, dass** so viel des Stickstoffhydrids der wässrigen Flüssigkeit zugegeben wird, dass sich ein pH-Wert im Bereich 9,5 bis 14, vorzugsweise ein pH-Wert größer 12 einstellt.

7. Verfahren nach einem der vorhergehenden Ansprüche, **dadurch gekennzeichnet, dass** nach dem Entfernen der Flüssigphase der Bodensatz aus agglomerierten SiO₂-Teilchen durch Aufschlämmen in VE-Wasser gewaschen wird.

8. Verfahren nach einem der vorhergehenden Ansprüche, **dadurch gekennzeichnet, dass** der Trocknungsschritt zur Entfernung der Restfeuchte des Bodensatzes in einem Temperaturbereich von 100°C bis 500°C erfolgt.

9. Verfahren nach einem der vorhergehenden Ansprüche, **dadurch gekennzeichnet, dass** der Bodensatz während des Trocknens bewegt wird.

10. Verfahren nach einem der vorhergehenden Ansprüche, **dadurch gekennzeichnet, dass** das Entfernen der Flüssigphase ein Dekantieren und ein anschließendes Zentrifugieren des Bodensatz aus agglomeriertem SiO₂-Teilchen unter Abtrennung von weiterer wässriger Flüssigkeit umfasst.

11. Verfahren nach einem der vorhergehenden Ansprüche, **dadurch gekennzeichnet, dass** die SiO₂-Suspension in einem geschlossenen Behälter eingefroren wird.

12. Verfahren nach einem der vorhergehenden Ansprüche, **dadurch gekennzeichnet, dass** die wässrige SiO₂-Suspension neben den SiO₂-Teilchen auch Dotierstoffe enthält.

13. Verfahren nach Anspruch 12, **dadurch gekennzeichnet, dass** als Dotierstoff ein Oxid oder mehrere Oxide - oder eine Vorstufe davon - eingesetzt werden, ausgewählt aus der folgenden Gruppe von Elementen: Al, B, P, Nb, Ta, Mg, Ga, Zn, Ca, Sr, Ba, Cu, Sb, Bi, Ge, Hf, Zr, Ti sowie alle Seltenerdmetalle.

14. Verwendung des nach dem Verfahren nach Anspruch 12 oder 13 hergestellten SiO₂-Granulats als Ausgangsstoff für optisch aktive Materialien für laseraktive Komponenten.

15. Verwendung des nach dem Verfahren nach Anspruch 12 oder 13 hergestellten SiO₂-Granulats als Ausgangsstoff für die Herstellung von Quarzglas für den Einsatz in Trockenätzprozessen.

## Claims

1. A method for producing a SiO₂ granulate, comprising providing a suspension containing SiO₂ particles in an aqueous liquid, freezing the suspension and removing the liquid, wherein the frozen SiO₂ suspension is thawed so as to form a liquid phase and a sediment of agglomerated SiO₂ particles, the liquid phase is removed and the sediment is dried for removing residual moisture and so as to form the SiO₂ granulate, **characterized in that** the suspension for adjusting the pH to more than 7 contains an addition of alkali-free bases in the form of nitrogen hydrides.

2. The method according to claim 1, **characterized in that** the water content of the suspension during freezing is at least 30% by wt. and not more than 90% by wt., preferably at least 70% by wt.

3. The method according to claim 1 or 2, **characterized in that** the SiO₂ suspension is frozen in a temperature range of -5°C to -40°C.

4. The method according to any one of the preceding claims, **characterized in that** the suspension is frozen for a period of at least 12 hours.

5. The method according to any one of the preceding claims, **characterized in that** ammonia (NH₃) or ammonium carbonate ((NH₄)₂CO₃) or Urotropin (C₆H₁₂N₄) or ammonium carbamate (CH₆N₂O₂) is added as nitrogen hydride.

6. The method according to any one of the preceding claims, **characterized in that** nitrogen hydride is added to the aqueous liquid in such an amount that a pH is obtained in the range of 9.5 to 14, preferably a pH of more than 12.

7. The method according to any one of the preceding claims, **characterized in that** after removal of the liquid phase the sediment of agglomerated SiO₂ particles is washed by being slurried in demineralized water.

8. The method according to any one of the preceding claims, **characterized in that** the drying step for removing the residual moisture of the sediment is carried out in a temperature range of 100°C to 500°C.

9. The method according to any one of the preceding claims, **characterized in that** the sediment is moved while being dried.

10. The method according to any one of the preceding claims, **characterized in that** the removal of the liquid phase comprises decanting and subsequent centrifuging of the sediment of agglomerated SiO₂ particles under separation of further aqueous liquid.

11. The method according to any one of the preceding claims, **characterized in that** the SiO₂ suspension is frozen in a closed container.

12. The method according to any one of the preceding claims, **characterized in that**, apart from SiO₂ particles, the aqueous SiO₂ suspension also contains dopants.

13. The method according to claim 12, **characterized in that** as the dopant an oxide, or plural oxides, or a precursor thereof, is used, selected from the following group of elements: Al, B, P, Nb, Ta, Mg, Ga, Zn, Ca, Sr, Ba, Cu, Sb, Bi, Ge, Hf, Zr, Ti and all rare-earth metals.

14. Use of the SiO₂ granulate produced according to the method according to claim 12 or 13 as a starting material for optically active materials for laser-active components.

15. Use of the SiO₂ granulate produced according to the method according to claim 12 or 13 as the starting material for producing quartz glass for use in dry etching processes.

## Revendications

1. Procédé de fabrication d'un granulat de SiO₂, comprenant la mise à disposition d'une suspension qui contient des particules de SiO₂ dans un liquide aqueux, la congélation de la suspension et le retrait du liquide, la suspension congelée de SiO₂ étant décongelée avec formation d'une phase liquide et d'un dépôt constitué de particules de SiO₂ agglomérées, la phase liquide étant retirée et le dépôt étant séché dans le but de retirer l'humidité résiduelle et avec formation du granulat de SiO₂, **caractérisé en ce que** la suspension destinée à ajuster la valeur de pH supérieure à 7 contient un additif de bases exemptes d'alcali sous forme d'hydrures d'azote.

2. Procédé selon la revendication 1, **caractérisé en ce que** la teneur en eau de la suspension lors de la congélation est d'au moins 30% en poids et au maximum de 90% en poids, de préférence d'au moins 70% en poids.

3. Procédé selon la revendication 1 ou 2, **caractérisé en ce que** la congélation de la suspension de SiO₂ est réalisée dans une plage de température de -5°C à -40°C.

4. Procédé selon l'une quelconque des revendications précédentes, **caractérisé en ce que** la suspension est congelée pendant une durée d'au moins 12 heures.

5. Procédé selon l'une quelconque des revendications précédentes, **caractérisé en ce que** de l'ammoniac (NH₃) ou du carbonate d'ammonium ((NH₄)₂CO₃) ou de l'urotropine (C₆H₁₂N₄) ou du carbamate d'ammonium (CH₆N₂O₂) est ajouté comme hydrure d'azote.

6. Procédé selon l'une quelconque des revendications précédentes, **caractérisé en ce qu'**une telle quantité d'hydrure d'azote du liquide aqueux est ajoutée de manière à ce qu'une valeur de pH située dans la plage de 9,5 à 14, de préférence une valeur de pH supérieure à 12, se règle.

7. Procédé selon l'une quelconque des revendications précédentes, **caractérisé en ce qu'**après le retrait de la phase liquide le dépôt constitué de particules de SiO₂ agglomérées est lavé par mise en suspension dans de l'eau déminéralisée.

8. Procédé selon l'une quelconque des revendications précédentes, **caractérisé en ce que** l'étape de séchage destinée à retirer l'humidité résiduelle du dépôt est réalisée dans une plage de température de 100°C à 500°C.

9. Procédé selon l'une quelconque des revendications précédentes, **caractérisé en ce que** le dépôt est mis en mouvement pendant le séchage.

10. Procédé selon l'une quelconque des revendications précédentes, **caractérisé en ce que** le retrait de la phase liquide comprend un décantage et une centrifugation suivante du dépôt constitué de particules de SiO₂ agglomérées avec séparation de liquide aqueux supplémentaire.

11. Procédé selon l'une quelconque des revendications précédentes, **caractérisé en ce que** la suspension de SiO₂ est congelée dans un récipient fermé.

12. Procédé selon l'une quelconque des revendications précédentes, **caractérisé en ce que** la suspension aqueuse de SiO₂, outre les particules de SiO₂, contient également des agents de dopage.

13. Procédé selon la revendication 12, **caractérisé en ce qu'**un oxyde ou plusieurs oxydes - ou un précurseur de ceux-ci - sont utilisés comme agent de dopage, sélectionnés dans le groupe suivant d'éléments : Al, B, P, Nb, Ta, Mg, Ga, Zn, Ca, Sr, Ba, Cu, Sb, Bi, Ge, Hf, Zr, Ti ainsi que tous les métaux de terres rares.

14. Utilisation du granulat de SiO₂ fabriqué selon le procédé selon la revendication 12 ou 13, en tant que matière de départ pour des matériaux optiquement actifs pour des composants à activité laser.

15. Utilisation du granulat de SiO₂ fabriqué selon le procédé selon la revendication 12 ou 13, en tant que matière de départ pour la fabrication de verre de quartz pour l'utilisation dans des processus de gravure à sec.
